# EUROPEAN PATENT SPECIFICATION

(11) **EP 4 177 577 B1**
(45) Date of publication and mention of the grant of the patent: **20.05.2026**
(21) Application number: 20788699.5
(22) Date of filing: 06.07.2020
(51) Int. Cl.: G01F 1/80, G01F 1/84, G01G 11/00

(54) **CORIOLIS MEASURING SCALE AND MEASURING METHOD**
CORIOLIS-MESSWAAGE UND MESSVERFAHREN
BALANCE DE MESURE DU TYPE CORIOLIS ET PROCÉDÉ DE MESURE

(43) Date of publication of application: 10.05.2023
(73) Proprietor: Henan Fengbo Automation Co., Ltd., Zhengzhou, Henan 450016 (CN)
(72) Inventor: YANG, Dezhu, Zhengzhou, Henan 450016 (CN); CHEN, Lixin, Zhengzhou, Henan 450016 (CN); WU, Jisheng, Zhengzhou, Henan 450016 (CN); HUANG, Guolei, Zhengzhou, Henan 450016 (CN)
(74) Representative: Maiwald GmbH
(86) International application number: PCT/CN2020/100445
(87) International publication number: WO 2022/006712

(56) References cited:
- CN-U- 202 066 542
- CN-U- 202 066 542
- CN-U- 205 228 547
- CN-U- 205 228 548
- CN-U- 205 228 548
- CN-U- 210 862 874
- CN-Y- 2 681 100
- DE-A1- 102017 010 852
- DE-A1- 4 442 462
- US-A1- 2012 103 110
- US-B1- 6 186 193

## Description

### TECHNICAL FIELD

Embodiments of the present disclosure relate to a Coriolis weighing scale and a weighing method.

### BACKGROUND

During a conveying and transporting process of a powdery material, it is usually necessary to accurately measure the material. For example, when conveying pulverized coal to a kiln, in order to accurately control a kiln temperature, it is necessary to accurately measure quantity of the pulverized coal; when loading a transport vehicle with bulk powder, in order to ensure that an approved loading quantity is reached without penalty for overweight or wasting time for reloading when not fully loaded, it is also necessary to accurately measure the loading quantity. A Coriolis weighing scale is a commonly-used tool for measuring mass of the powdery material.

CN 205 228 548 U relates to relates to an adopt gear power transmission element's built -in coriolis balance, including the measuring chute that has feed inlet and discharge gate, along upper and lower direction wear the dress in the measuring chute the main shaft and be used for the rotatory drive arrangement of driving spindle, drive arrangement's output shaft is the parallel and setting of radially staggering with the main shaft, drive arrangement is located the measuring chute outside and just is located the radial one side of main shaft, drive arrangement's output shaft and main shaft pass through drive mechanism and are connected. In the carrier roller device, the main shaft with the parallel and setting of staggering of drive arrangement's output shaft, drive arrangement sets up in the radial one side of main shaft, the drive arrangement position directly over the main shaft of having staggered, can be with the position department of discharge gate setting directly over the main shaft, the middle part of measurement dish can directly be fallen to the material, avoid the measurement dish unbalance loading to appear and cause the problem that measurement accuracy is low, additionally, drive arrangement sets up the outside at the measuring chute, be favorable to the drive arrangement heat dissipation, also the be convenient for maintenance and the maintenance in later stage.

In DE 44 42 462 A1, the alterations of the torques, occurring according to the Coriolis principle at the measurement wheel, serve as a measurement variable for determining the mass flow. A continuous difference building is carried out for the two driving belts , respectively driven by the drive motors . The delivery material is led on a measuring wheel, which is provided with vanes for the radial deflection of the material flow. The wheel is driven by a drive motor. In addition to the drive belt for the measuring wheel, a further essentially similarly designed drive belt is arranged with a second motor. The two belts are supported across a torque measuring system.

DE 10 2017 010852 A1 discloses an apparatus having a shaft, a bearing sleeve for rotatably supporting the shaft, a housing, in which at least one part of the bearing sleeve is arranged, and a sealing element, which seals a gap between a wall of the housing and the bearing sleeve. The sealing element divides the gap gas-tight into a first partial space adjacent to the front side of the sealing element and a second partial space adjacent to the back side of the sealing element, the sealing element having a flexible part, which is in contact with the wall of the housing and/or the bearing sleeve, and the housing having a first barrier gas inlet for introducing barrier gas into the first partial space as well as a second barrier gas inlet for introducing barrier gas into the second partial space.

US 2012/0103110 A1 relates to a method and an apparatus for measuring a mass flow of flowable bulk materials according to the Coriolis principle of measurement. The apparatus comprises a vane wheel by which a mass flow that is supplied in axial direction can be radially redirected and by which it is possible to detect the drive torque that that necessary to achieve the redirection. A drive shaft that is routed through the top side of the housing is configured as a hollow shaft through which the bulk material can be fed to the vane wheel in vertical direction toward the center of its axis of rotation.

CN 202 066 542 U relates to a Coriolis weighting scale which comprises a weighting bin with a charging opening and a discharging opening, and a main shaft passing from the top of the weighting bin. A motor for driving the main shaft is arranged at the top of the weighting bin. The motor is assembled on the weighting bin through a fixed bracket. A torque sensor connected with the main shaft in a driving mode is fixed and assembled in the fixed bracket. The fixed bracket comprises a pallet and a vertical pillar, wherein the pallet is used for supporting and assembling the torque sensor, and the vertical pillar is enclosed around the pallet and is fixedly connected with the pallet. The vertical pillar is fixed and assembled at the top of the weighting bin. As the pallet is arranged on the fixed bracket of the Coriolis weighting scale, the torque sensor can adopt a vertical fixed dynamic torque sensor with a fixed flange. The torque sensor is fixed by a bolt, thereby greatly improving the assembling precision of the torque sensor. In addition, the torque sensor is firmer in assembly, so the problem that the torque sensor is deflected to cause the coaxiality difference with the main shaft and a speed reducer in the assembling or working process is solved.

CN 205 228 547 U relates to an adopt flexible power transmission element's side to put formula coriolis balance, this coriolis balance including the measuring chute that has feed inlet and discharge gate, wear the dress in the measuring chute the main shaft and be used for the rotatory drive arrangement of driving spindle, be connected with the measurement dish on the main shaft, the feed inlet is located the measurement dish directly over, drive arrangement is located the outside of measuring chute, and drive arrangement and spindle drive are connected. The utility model provides a drive arrangement sets up in the outside of measuring chute, and the feed inlet can directly set up directly over the measurement dish, and the middle part of measurement dish can directly be fallen to the material, avoids the measurement dish unbalance loading to appear and causes the problem that measurement accuracy is low, and in addition, drive arrangement sets up in the outside of measuring chute, is favorable to the drive arrangement heat dissipation, the maintenance and the maintenance in the later stage of also being convenient for.

### SUMMARY

Embodiments of the present disclosure provides a Coriolis weighing scale according to independent claim 1 and a weighing method according to claim 12, which can improve the measuring accuracy and can be used for measuring mass of a small-flow material.

At one aspect, an embodiment of the present disclosure provides a Coriolis weighing scale, the Coriolis weighing scale comprises: a driving portion, including: an outer housing body, an accommodating space being defined inside the outer housing body; a drive motor, having a base and an output shaft member, at least a portion of the drive motor being arranged outside the outer housing body; a motor seat, fixed to the base of the drive motor and having a first shaft hole, the output shaft member running through the first shaft hole; and a bearing support, arranged at an outer side of the motor seat along a radial direction and having a second shaft hole, the motor seat and the bearing support are arranged in the accommodating space, the bearing support is fixed to the outer housing body, the first shaft hole and the second shaft hole are coaxial, a first bearing is provided between a side wall of the first shaft hole of the motor seat and the output shaft member, and a second bearing is provided between an outer wall of the motor seat and a side wall of the second shaft hole of the bearing support.

For example, in the Coriolis weighing scale according to an embodiment of the present disclosure, the driving portion further includes a pulley adjusting member having a through hole for the bearing support to pass through; the outer housing body includes a boss extending inwardly on an inner wall of the outer housing body and located on a lower side of the pulley adjusting member, and the pulley adjusting member is arranged on the boss.

For example, in the Coriolis weighing scale according to an embodiment of the present disclosure, the driving portion further includes a distance adjusting member configured to couple the pulley adjusting member to the outer housing body and adjust a radial distance from the pulley adjusting member to the outer housing body; and the bearing support includes a protruding portion arranged on an outer wall of the bearing support, extending outward in a circumferential direction and fixed to the pulley adjusting member.

For example, in the Coriolis weighing scale according to an embodiment of the present disclosure, the driving portion further includes a measuring touch member fixed on the motor seat or the drive motor and configured to rotate under driving of the motor seat or the drive motor and a sensor measuring device arranged on the outer housing body, the measuring touch member is configured to abut against the sensor measuring device under a condition that the drive motor outputs motive power, and the sensor measuring device is configured to detect an acting force applied to the sensor measuring device by the measuring touch member and convert the acting force into an electrical signal.

For example, in the Coriolis weighing scale according to an embodiment of the present disclosure, the driving portion further includes an outer cover arranged above the outer housing body and forming a space with the outer housing body, the measuring touch member and the sensor measuring device being accommodated in the space, at least a portion of the drive motor is located outside the outer cover.

For example, in the Coriolis weighing scale according to an embodiment of the present disclosure, the pulley adjusting member is an L-shaped plate, the L-shaped plate includes a main plate and a side plate, the through hole is provided in the main plate, and the side plate is perpendicular to the main plate.

For example, in the Coriolis weighing scale according to an embodiment of the present disclosure, the distance adjusting member includes a bolt, one end of the bolt runs through a screw hole on the side plate, an other end of the bolt runs through a screw hole on the outer housing body, and the bolt is configured to adjust the radial distance between the pulley adjusting member and the outer housing body by rotating.

For example, the Coriolis weighing scale according to an embodiment of the present disclosure further comprises a weighing portion, the weighing portion includes: a feed member provided with a feed port for a material to enter, and located upstream of a material travel direction; a protective housing body arranged at an outer side of the feed member along a circumferential direction; a connecting pipe coupled to the protective housing body, and having an opening facing a space between the feed member and the protective housing body; and a measuring plate, arranged below the feed member along the material travel direction; an air passage is formed between the protective housing body and the feed member, the connecting pipe is configured to pass compressed air at an end portion of the feed member that is located on a side of the measuring plate through the air passage; and the driving portion is arranged outside the weighing portion.

For example, in the Coriolis weighing scale according to an embodiment of the present disclosure, the weighing portion further includes a flow guide member arranged between the feed member and the protective housing body on a side of the feed member that is close to the measuring plate, and located in the air passage.

The weighing portion further includes: a housing body, located at an outermost side of the weighing portion and fixedly connected with the protective housing body; a main shaft, coaxially and fixedly connected with the measuring plate and configured to drive the measuring plate to rotate; a main shaft seat, provided with a shaft hole for the main shaft to run through; a cover, arranged on a side of the main shaft seat that is located at the measuring plate and forming a closed space together with the main shaft seat; and a pipe member, extending from an outer wall of the main shaft seat toward the housing body, one end of the pipe member being fixedly coupled to the main shaft seat and an other end of the pipe member being fixedly coupled to the housing body, and the pipe member being configured such that the closed space is in communication with outside of the housing body.

The weighing portion includes at least two of the pipe members, the at least two pipe members are arranged along a circumferential direction of the housing body, one of the at least two pipe members is configured to pass compressed air into the closed space, and one of the at least pipe members is configured to fill the closed space with lubricating oil.

For example, in the Coriolis weighing scale according to an embodiment of the present disclosure, the measuring plate includes: a wheel disc, a shaft hole for the main shaft to run through being provided in the wheel disc; an end ring, arranged on a side of the wheel disc that faces the feed member; and a plurality of blades, arranged between the wheel disc and the end ring along a circumferential direction of the measuring plate.

For example, in the Coriolis weighing scale according to an embodiment of the present disclosure, the weighing portion further includes: a material guide member, fixedly coupled to a top end of the main shaft, arranged at a central axis position of the shaft hole of the wheel disc, and extending between a boundary of the feed member and the measuring plate and the wheel disc.

For example, in the Coriolis weighing scale according to an embodiment of the present disclosure, the material guide member includes a guide cone, the guide cone is coaxial with the measuring plate, the guide cone includes: a cone bottom portion, a through hole for the main shaft to run through being formed in a center of the cone bottom portion, the main shaft being clamped with the cone bottom portion, and the cone bottom portion being fixed to the wheel disc; and a cone tip portion, arranged on a side of the cone bottom portion that is located at the feed member and fixed to the top end of the main shaft.

For example, in the Coriolis weighing scale according to an embodiment of the present disclosure, the weighing portion further includes: a third bearing, arranged between the main shaft seat and the main shaft and accommodated in the closed space.

For example, in the Coriolis weighing scale according to an embodiment of the present disclosure, the third bearing includes at least two third sub-bearings arranged along the main shaft, and the at least two third sub-bearings are spaced apart by a sleeve.

For example, in the Coriolis weighing scale according to an embodiment of the present disclosure, the weighing portion further includes: a second pulley, arranged on a side of the main shaft that is opposite to the measuring plate and fixedly connected with the main shaft, the output shaft member includes an output shaft and an extended shaft sleeve, and the extended shaft sleeve is fixed on the output shaft, the driving portion further includes: a first pulley, fixed to the extended shaft sleeve and a synchronous belt being disposed on the first pulley, the outer housing body is provided with a through hole for the synchronous belt to run through; and the first pulley and the second pulley are connected by the synchronous belt, so that the drive motor drives the main shaft to rotate.

For example, in the Coriolis weighing scale according to an embodiment of the present disclosure, the weighing portion further includes: a second pulley accommodating portion, a belt hole for the synchronous belt to run through being formed in the second pulley accommodating portion; and a pulley cover plate, arranged on a side of the second pulley accommodating portion that faces away from the feed member, so that the second pulley accommodating portion, the pulley cover plate, an end face of the main shaft seat that are located on an opposite side of the measuring plate jointly constitute a space for accommodating the second pulley.

For example, in the Coriolis weighing scale according to an embodiment of the present disclosure, the first bearing includes at least two first sub-bearings arranged up and down along the output shaft member, the at least two first sub-bearings are spaced apart by a sleeve in an extension direction of the output shaft member, the second bearing includes at least two second sub-bearings arranged up and down along the output shaft member, and the at least two second sub-bearings are spaced apart by another sleeve.

For example, in the Coriolis weighing scale according to an embodiment of the present disclosure, a discharge port is disposed at an end of the housing body that is away from the feed port, and the housing body includes at least two sub-housing bodies fixedly connected with each other.

For example, the Coriolis weighing scale according to an embodiment of the present disclosure further comprises: a control system, including: a processor, in signal connection with the sensor measuring device, and configured to calculate mass of the material to be measured according to the electrical signal; and a memory, storing instructions in the memory, executing above-described actions under a condition that the processor executes the instructions, and storing mass data of the material to be measured.

At another aspect, an embodiment of the present disclosure provides a weighing method adopting the Coriolis weighing scale as mentioned above, and comprising steps of: rotating the output shaft member of the drive motor, to drive the measuring plate to rotate; making the material to be measured enter the weighing portion from the feed port; measuring, by the sensor measuring device, an acting force applied to the sensor measuring device by the measuring touch member; calculating the mass of the material to be measured by using the acting force.

For example, in the weighing method according to an embodiment of the present disclosure, the calculating the mass of the material to be measured by using the acting force includes: converting the acting force into an electrical signal; and calculating the mass of the material to be measured by using the electrical signal.

While making the material to be measured enter the weighing portion from the feed port, the weighing method according to the present disclosure further comprises: passing compressed air through the connecting pipe; the weighing method further comprises: adding lubricating oil into the closed space of the main shaft seat, including: leading out compressed air in the closed space through an air displacement oil injecting opening; and injecting, by the air displacement oil injecting opening, the lubricating oil into the closed space.

### BRIEF DESCRIPTION OF THE DRAWINGS

In order to clearly illustrate the technical solution of the embodiments of the invention, the drawings of the embodiments will be briefly described in the following; it is obvious that the described drawings are only related to some embodiments of the invention and thus are not limitative of the invention.
FIG. 1 shows a cross-sectional schematic diagram of a driving portion of a Coriolis weighing scale according to an embodiment of the present disclosure;
FIG. 2 shows a schematic plan view of a Coriolis weighing scale according to an embodiment of the present disclosure;
FIG. 3 shows a cross-sectional schematic diagram of a weighing portion of a Coriolis weighing scale according to an embodiment of the present disclosure;
FIG. 4 shows a cross-sectional schematic diagram of a measuring plate of the weighing portion of the Coriolis weighing scale according to an embodiment of the present disclosure;
FIG. 5 shows a cross-sectional schematic diagram of the Coriolis weighing scale according to an embodiment of the present disclosure; and
FIG. 6 shows a flow chart of a weighing method according to an embodiment of the present disclosure.

### DETAILED DESCRIPTION

In order to make objects, technical details and advantages of the embodiments of the invention apparent, the technical solutions of the embodiment will be described in a clearly and fully understandable way in connection with the drawings related to the embodiments of the invention. It is obvious that the described embodiments are just a part but not all of the embodiments of the invention. Based on the described embodiments herein, those skilled in the art can obtain other embodiment(s), without any inventive work, which should be within the scope of the invention.

Unless otherwise defined, all the technical and scientific terms used herein have the same meanings as commonly understood by one of ordinary skill in the art to which the present disclosure belongs. The terms, such as "first," "second," or the like, which are used in the description and the claims of the present disclosure, are not intended to indicate any sequence, amount or importance, but for distinguishing various components. The terms, such as "comprise/comprising," "include/including," or the like are intended to specify that the elements or the objects stated before these terms encompass the elements or the objects and equivalents thereof listed after these terms, but not preclude other elements or objects. The terms, such as "connect/connecting/connected," "couple/coupling/coupled" or the like, are not limited to a physical connection or mechanical connection, but may include an electrical connection/coupling, directly or indirectly. The terms, "on," "under," "left," "right," or the like are only used to indicate relative position relationship, and when the position of the object which is described is changed, the relative position relationship may be changed accordingly.

A Coriolis weighing scale mainly adopts a gear transmission mechanism; the weighing scale has a feed port and a discharge port, a main measuring component is a measuring plate located at a lower portion of the feed port, and a driving device is a side-arranged geared motor; a driving force is transmitted to a gear box located inside the scale body through a synchronous belt, a drive shaft of the gear box drives the measuring plate to rotate, powder flows from the feed port into the measuring plate, the measuring plate is subjected to reverse resistance, a sensor detecting device mounted on the gear box mechanism can detect a torque received by a main shaft, and can convert a torque signal into mass of the material through a certain algorithm.

Since the transmission device of the above-described weighing scale is composed of a gear box built inside the weighing scale body, in order to ensure measuring accuracy, processing and assembly of the gear box requires relatively high accuracy, which greatly increases difficulties in processing and assembling the box body and a gear pair mechanism, resulting in increased cost; meanwhile, a complex structure thereof also renders very high maintenance cost in a later use process, so that the comprehensive cost of the device remains high, which is not favorable for promotion. Therefore, a new type of weighing scale that not only has measuring accuracy but also is economically reasonable is needed.

An embodiment of the present disclosure provides a Coriolis weighing scale, including a driving portion, the driving portion including: an outer housing body, inside which an accommodating space is defined; a drive motor, having a base and an output shaft member, at least a portion of the drive motor being arranged outside the outer housing body; a motor seat, fixed to the base of the drive motor and having a first shaft hole, the output shaft member running through the first shaft hole; a bearing support, arranged at an outer side of the motor seat along a radial direction and having a second shaft hole, wherein the motor seat and the bearing support are arranged in the accommodating space, the bearing support is fixed to the outer housing body, the first shaft hole and the second shaft hole are coaxial, a first bearing is provided between a side wall of the first shaft hole of the motor seat and the output shaft member, and a second bearing is provided between an outer wall of the motor seat and a side wall of the second shaft hole of the bearing support. Here, it should be noted that, the output shaft member of the motor may include an output shaft body of the motor and an extended portion connected with the same, for example, an extended shaft sleeve. The first bearing is provided between the side wall of the first shaft hole and the output shaft member, which may be that the first bearing is provided between the output shaft and/or the extended shaft sleeve and the side wall of the first shaft hole. Since the output shaft and the extended shaft sleeve are fixed together, some of the following descriptions do not deliberately distinguish between the output shaft and the output shaft member. The output shaft of the drive motor and/or the extended portion thereof cooperates with the motor seat through the first bearing, and the motor seat fits with the bearing support through the second bearing, so with respect to the bearing support, the drive motor and the motor seat are integrally in fit connection with the bearing support through the second bearing, the first bearing between the output shaft of the drive motor and/or the extended portion of the shaft and the motor seat becomes an internal bearing of the drive motor in structure, and a friction force between them becomes an internal force, so that when measuring material mass subsequently, a torque force that causes reverse rotation of the output shaft of the drive motor and the motor seat will not be affected, which makes measuring accuracy higher and is suitable for measuring mass of a small-flow material.

Alternatively, if a length of the output shaft body of the motor is sufficient, the output shaft member of the motor may only include the output shaft, which will not be limited in the embodiment of the present disclosure.

Hereinafter, the technical solutions of the embodiments of the present disclosure will be described in detail in conjunction with the accompanying drawings.

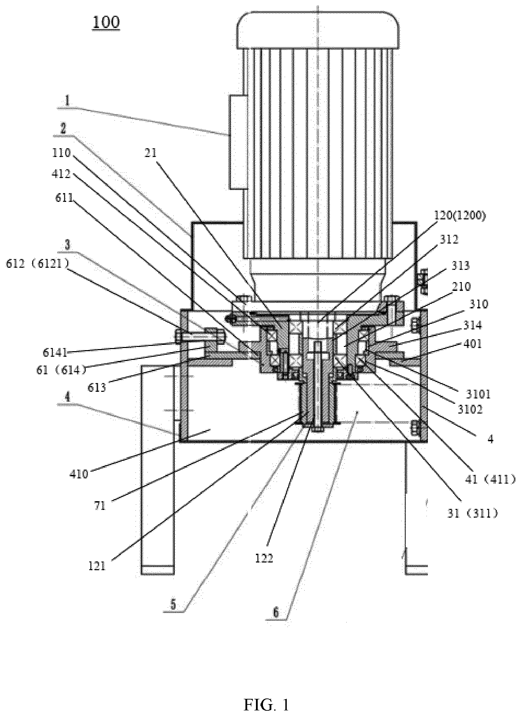

FIG. 1 shows an exemplary diagram of a driving portion of a Coriolis weighing scale according to an embodiment of the present disclosure. Referring to FIG. 1, the driving portion 100 includes: an outer housing body 4, inside which an accommodating space 410 is defined; a drive motor 1, having a base 110 and an output shaft member 120, at least a portion of the drive motor 1 being arranged outside the outer housing body 4; a motor seat 21, fixed to the base 110 of the drive motor 1 and having a first shaft hole 210, the output shaft member 120 running through the first shaft hole 210; a bearing support 3, arranged at an outer side of the motor seat 21 along a radial direction, and having a second shaft hole 310, wherein the motor seat 21 and the bearing support 3 are arranged in the accommodating space 410, the bearing support 3 is fixed to the outer housing body 4, the first shaft hole 210 and the second shaft hole 310 are coaxial, a first bearing 31 is provided between a side wall of the first shaft hole 210 of the motor seat 21 and the output shaft member 120, and a second bearing 41 is provided between an outer wall of the motor seat 21 and a side wall of the second shaft hole 310 of the bearing support 3, wherein the output shaft member 120 includes an output shaft 1200 and an extended portion, for example, an extended shaft sleeve 121.

In this way, the output shaft of the drive motor and the extended shaft sleeve on the output shaft are in a rotating fit with the motor seat; and the motor seat is also in a rotating fit with the bearing support.

For example, the drive motor 1 may be partially or entirely located outside the outer housing body 4. In order that the drive motor 1 can pass through, a through hole is formed in the outer housing body 4 for the drive motor 1 to pass through; the base of the drive motor may be fixed to the motor seat through a flange, etc.; the flange may be located at the through hole of the outer housing body, that is, a portion above the fixing flange is all located outside the outer housing body; and any position between an upper surface and a lower surface of the base of the drive motor may be exactly located at a same height as an outer surface of the outer housing body 4 that is located on the drive motor side, or the upper surface or the lower surface of the outer housing body 4 is located at a same position as the outer surface; or, any position between an upper surface and a lower surface of a radial portion of the motor seat which is connected with the base of the drive motor by the flange may be exactly located at a same height as the outer surface of the outer housing body that is located on the drive motor side, or the upper surface or the lower surface is located at a same position as the outer surface, here the upper surface refers to a surface facing the motor side, and the lower surface refers to a surface facing away from the motor side; by providing the flange at the through hole of the outer housing body, the motor seat and the output shaft are integrally located inside the outer housing body, which, thus, may better protect the motor seat, the output shaft, and the bearing support, as well as the first bearing and the second bearing, and may also reduce a volume of the outer housing body and reduce cost; moreover, when repairing or replacing the motor, since the flange is located at the through hole, operation is more convenient. Alternatively, the fixing flange of the base and the motor seat may be located inside the outer housing body, that is, a portion of the drive motor except the base is located at the through hole of the outer housing body.

For example, the base of the drive motor may be fixed to the motor seat by bolting, screwing, clamping, etc., which will not be limited in the embodiment of the present disclosure, as long as the base of the motor can be fixed to the motor seat.

For example, the motor seat may include a hollow columnar main body portion with a shaft hole, for example, a cylinder, a prism, etc.; in order to be fixed to the base of the motor, the motor seat may further include a peripheral edge located on an end of a main body portion that faces the drive motor and extending outward along a radial direction, to facilitate fixation.

For example, a main body of the bearing support 3 may be a hollow column with a shaft hole 310, for example, a cylinder, a prism, etc.; in order to facilitate mounting the second bearing 41 between the bearing support 3 and the motor seat 21, the second shaft hole 310 in the bearing support may be a stepped hole; for example, as shown in FIG. 1, the second shaft hole 310 may have two portions with different inner diameters, which are sequentially a first portion 3101 and a second portion 3102 downward from the drive motor side; and inner diameters of the first portion 3101 and the second portion 3102 are sequentially reduced; wherein the second portion 3102 is located on a side of the bearing support that is farthest from the drive motor.

Alternatively, in order to facilitate mounting and positioning the bearings, the second shaft hole 310 of the bearing support may have two portions or more than three portions with different inner diameters, which will not be limited in the embodiment of the present disclosure, that is, the second shaft hole 310 includes at least two portions with different inner diameters.

For example, the first bearing 31 includes at least two first sub-bearings 311 and 312 arranged up and down along the output shaft member 120; the at least two first sub-bearings 311 and 312 are spaced apart by a spacer sleeve 313 in an extension direction of the output shaft member 120; a lower end face of an inner ring of the first sub-bearing 311 may be in a stop fit with a spacer sleeved on the output shaft 1200 or the extended shaft sleeve of the output shaft 1200, or positioned by an end portion of the motor seat 21 that is away from the motor; an upper end face of the first sub-bearing 311, for example, an upper end face of the inner ring may be provided with the spacer sleeve 313; an end of the spacer sleeve 313 that is away from the first sub-bearing 311 is provided with a second sub-bearing 312; an upper end face of an outer ring of the second sub-bearing 312 that is away from the spacer sleeve 313 may be in a stop fit with the motor seat and/or an upper end face of an inner ring of the second sub-bearing 312 that is away from the spacer sleeve 313 may be in a stop fit with the base of the motor, for example, may be positioned by a step of the base of the drive motor or a inwardly protruding portion of the motor seat, so through such a fit, the at least two first sub-bearings may be prevented from moving up and down but only rotate around the output shaft.

For example, in order to further reduce a frictional force when the output shaft or the extended shaft sleeve sleeved on the output shaft rotates relative to the motor seat, the first bearing 31 may further include three or more sub-bearings arranged up and down along the shaft; for positioning, the three sub-bearings may be positioned by spacer sleeves, steps or grooves on the extended shaft sleeve, or steps or grooves on an inner wall of the first shaft hole 210 of the motor seat, which will not be limited in the embodiment of the present disclosure, as long as the three sub-bearings can be positioned.

For example, in order to facilitate mounting and positioning the bearing, the outer wall of the motor seat 21 that faces the inner wall of the second shaft hole 310 may also be set to have a stepped shape, and a positioning face may be provided for mounting the second bearing 41 by providing a step.

For example, the second bearing 41 includes at least two second sub-bearings 411 and 412 arranged up and down along the output shaft member; a lower end face of the second sub-bearing 412 may be in a stop fit with the bearing support, for example, the second sub-bearing 412 may be positioned by a step at a junction between a second portion 3102 and a first portion 3101 of the second shaft hole of the bearing support; an upper end face of an inner ring of the second sub-bearing 412 that faces the drive motor may be in a stop fit with the motor seat or in a stop fit with a step on the outer wall of the motor seat, and/or a lower end face of the outer ring is provided with a spacer sleeve, the spacer sleeve spaces apart the at least two second sub-bearings 411 and 412; a lower end face of an outer ring of the first sub-bearing 411 is provided with a spacer sleeve; and the first sub-bearing 411 may be positioned by a inwardly protruding portion of the bearing support 3 or a baffle with a shaft hole in the center, for example, a lower end face of the second sub-bearing 411 may be in a stop fit with the protruding portion or the baffle.

For example, in the Coriolis weighing scale according to the embodiment of the present disclosure, the driving portion 100 may further include: a pulley adjusting member 61, having a through hole 611 for the bearing support to pass through; the outer housing body 4 includes a boss 401, extending inwardly on an inner wall of the outer housing body 4 and located on a lower side of the pulley adjusting member 611, so that the pulley adjusting member 61 may be provided on the boss 401; and the boss 401 is configured to support the pulley adjusting member 61.

Alternatively, the boss 401 may be arranged one round along a circumferential direction of the outer housing body 4, or include a plurality of boss sections arranged at intervals; lengths of the plurality of boss sections may be the same or different from each other, which will not be limited in the embodiment of the present disclosure, as long as the boss can sufficiently support the pulley adjusting member 61.

For example, when a cross section of the outer housing body 4 is a rectangle, the boss 411 may be a rectangular ring.

For example, in the Coriolis weighing scale according to the embodiment of the present disclosure, the driving portion 100 may further include: a distance adjusting member 612, configured to couple the pulley adjusting member 61 to the outer housing body 4 and adjust a distance from the pulley adjusting member 61 to the outer housing body 4 in a direction perpendicular to the output shaft member 120 of the drive motor; the bearing support 3 includes a protruding portion 314, arranged on an outer wall of the bearing support 3, extending outward in a circumferential direction and fixed to the pulley adjusting member 61; the bearing support 3 is fixed to the outer housing body 4 by being fixed to the pulley adjusting member 61, and the protruding portion 314 may be fixed to the pulley adjusting member 61 by bolting, screwing, clamping, bonding, etc.

For example, when a cross section of the bearing support 3 is a circular ring, the protruding portion 314 may be a circular ring.

For example, the pulley adjusting member 61 may be an L-shaped plate; the L-shaped plate includes a main plate 613 and a side plate 614; the through hole 611 is opened in the main plate 613; the side plate 614 may be perpendicular to the main plate; in addition, the side plate 614 may extend in a direction parallel to the output shaft, and the side plate may be arranged parallel to the outer housing body. For example, when the cross section of the outer housing body is a rectangle, the side plate 614 may be parallel to a side wall of the outer housing body it faces.

For example, the distance adjusting member 612 may include a bolt 6121; one end of the bolt 6121 may run through a screw hole 6141 on the side plate 614, and the other end of the bolt 6121 may run through a screw hole on the outer housing body; the bolt may be a tension bolt and is configured to adjust the distance between the pulley adjusting member and the outer housing body in the direction perpendicular to the output shaft member 120 of the drive motor by rotating; and after adjusting to a required distance, the distance adjusting member 612 fixes the pulley adjusting member 61 to the outer housing body 4. For example, by rotating the bolt 6121, the distance of the bolt between the outer housing body and the side plate may be adjusted, so as to adjust the distance between the pulley adjusting member and the outer housing body in the direction perpendicular to the output shaft member 120 of the drive motor.

For example, a cross section of the outer housing body in the direction perpendicular to the output shaft may be a circle, a square or a rectangle; when the cross section of the outer housing body is a rectangle, the main plate 613 of the pulley adjusting member 61 may be a rectangle with a circular hole opened in a center for the bearing support 4 to run through; the side plate is arranged on a side edge of the main plate 613 that is away from a weighing portion 200; a plurality of distance adjusting members 612 may disposed on the side plate, for example, a plurality of bolts 6121 may disposed on the side plate; and by adjusting the plurality of bolts with a same amplitude, the side plate 614 after the adjustment is still parallel to the side wall of the outer housing body that the side plate 614 faces.

For example, in the driving portion, the output shaft member 120 may include the output shaft 1200 and the extended shaft sleeve 121; the extended shaft sleeve 121 is fixedly arranged on the output shaft 1200, for example, the extended shaft sleeve 121 may be in a press fit with the output shaft 1200 through a bolt 122 and a keyway may be used to prevent the extended shaft sleeve 121 from rotating relative to the output shaft 1200; a first pulley 71 is fixed to the extended shaft sleeve 121, for example, may be fixed to the extended shaft sleeve 121 by bolting, screwing, riveting or clamping, etc.; and a flat key may be provided on a fitting surface between the first pulley 71 and the extended shaft sleeve 121 to prevent the first pulley 71 from rotating relative to the extended shaft sleeve 121. The first pulley 71 is provided thereon with a synchronous belt 6; and the synchronous belt 6 is connected with a second pulley 72 of the weighing portion, so that a driving force of the drive motor is transmitted to a main shaft of the weighing portion through the synchronous belt, and the main shaft drives a measuring plate to rotate so as to measure mass of the material entering the weighing portion 200.

For example, a cover 5 may be provided on a side of the extended shaft sleeve 121 that is away from the motor; the cover 5 is fixed to the extended shaft sleeve 121 by the bolt 122; during mounting, after the first bearing and the second bearing inside the bearing support 3 have been mounted, the cover 5 may position the bearing support, so that the first bearing and the second bearing mounted inside the bearing support may be positioned along a shaft direction, to prevent the first bearing and the second bearing in the bearing support from moving up and down, for example, fixation may be implemented by screwing, riveting, clamping, etc. which will not be limited in the embodiment of the present disclosure.

For example, the outer housing body 4 is provided thereon with a through hole (not shown) for the synchronous belt 6 to run through, so that the synchronous belt runs through the through hole on the outer housing body 4 to enter a housing body of the weighing portion 200, and be sleeved on a second pulley 72 of the weighing portion.

In this way, when the synchronous belt 6 is mounted to the first pulley 71, the distance adjusting member 612 may be adjusted so that the pulley adjusting member 61 moves toward the weighing portion 200, that is, to increase a distance between a portion of the pulley adjusting member 61 that is away from the weighing portion 200 and the outer housing body 4 in the direction perpendicular to the output shaft member 120 of the drive motor; because the bearing support 3 is fixed to the pulley adjusting member 61 and the bearing support 3 supports the motor seat 21 and the drive motor 1, when the pulley adjusting member 61 moves, it will drive the bearing support 3, the motor seat 21 and the drive motor 1 to integrally move toward the weighing portion 200, so that the synchronous belt 6 may be conveniently mounted to the first pulley 71. When the synchronous belt 6 needs to be tightened, the distance adjusting member 612 may be adjusted so that the pulley adjusting member 61 moves away from the weighing portion 200, that is, to reduce the distance between the portion of the pulley adjusting member 61 that is away from the weighing portion 200 and the outer housing body 4, so as to tighten the synchronous belt to facilitate stable transmission of the driving force. For example, the pulley adjusting member 61 translates along a direction perpendicular to the output shaft, which is favorable for stability of the movement and facilitates control.

Alternatively, in order to leave space for the movement of the drive motor 1, the through hole opened on the outer housing body 4 for the drive motor 1 to pass through may be slightly larger than an outer diameter of the drive motor 1, for example, 0.1% to 1% larger than the outer diameter of the drive motor 1, which may be, for example, 0.5%, 0.6%, etc. This will not be limited in the embodiment of the present disclosure, and those skilled in the art may select an appropriate size of the through hole according to needs of movement.

For example, in the Coriolis weighing scale according to the embodiment of the present disclosure, the driving portion further includes: a measuring touch member 81, fixed on the motor seat 21 and configured to rotate as driven by the motor seat 21; a sensor measuring device 82, arranged on the outer housing body 4 or fixed to a component of the outer housing body, and including a sensing portion, wherein the measuring touch member 81 abuts against the sensing portion 821 of the sensor measuring device 82 as driven by the motor seat to have a movement trend opposite to a movement direction when the motor outputs motive power; the sensor measuring device 82 is configured to detect an acting force applied thereto by the measuring touch member 81, and convert the acting force into an electrical signal.

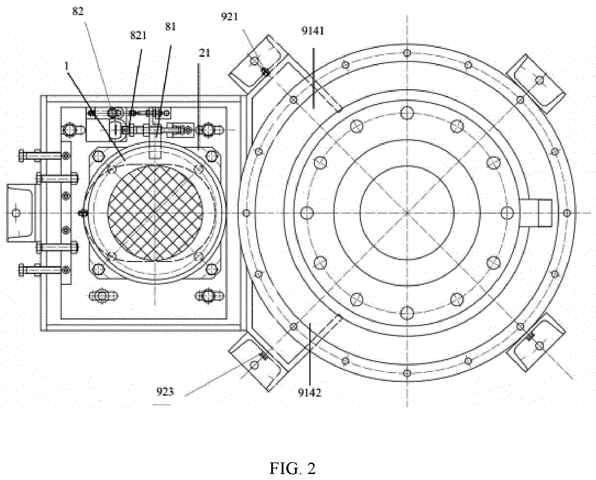

For example, as shown in FIG. 1 and FIG. 2, the driving portion 100 may further include: an outer cover 2, arranged above the outer housing body 4, and forming a space with the outer housing body 4, in which the measuring touch member 81 and the sensor measuring device 82 are accommodated, to protect the measuring touch member 81 and the sensor measuring device 82 arranged inside, wherein at least a portion of the motor 1 is located outside the outer cover 2.

For example, the measuring touch member 81 and the sensing portion 821 of the sensor measuring device 82 may be arranged on a same plane perpendicular to the output shaft member 120, that is, if the driving portion is arranged parallel to the ground, the two are arranged at a same height, or, heights thereof may be slightly different according to thicknesses of the measuring touch member 81 and the sensing portion 821 of the sensor measuring device 82 in the direction parallel to the output shaft, as long as the measuring touch member 81 can be ensured to abut against the sensing portion 821 of the sensor measuring device 82, when rotating as driven by the motor or the motor seat.

Alternatively, the measuring touch member 81 may be a rigid member such as a push rod, a baffle, etc.; the measuring touch member 81 may be linear or curved, as long as the measuring touch member 81 can abut against the sensing portion 821 of the sensor measuring device 82.

For example, on a plane perpendicular to the output shaft, observed from the drive motor side, the measuring touch member 81 may be provided in a counterclockwise direction or a clockwise direction of the sensing portion 821. Observed from the drive motor side, when the output shaft member 120 of the drive motor 1 normally outputs a driving force to drive the measuring plate of the weighing portion 200 to rotate, and the output shaft member 120 rotates in a clockwise direction on the plane perpendicular to the output shaft, the sensing portion 821 is arranged in a clockwise direction relative to the measuring touch member 81, so when the output shaft member 120 is subjected to a reverse torque, the motor seat will generate a movement trend of a positive direction, that is, a clockwise direction, so that the measuring touch member 81 also has a movement trend of a clockwise direction; due to blocking of the sensing portion 821 in a clockwise direction thereof, the sensing portion 821 is subjected to an acting force applied by the measuring touch member 81, and the mass of the material may be obtained according to the acting force.

Alternatively, as shown in FIG. 2, observed from the drive motor side, when the output shaft member 120 of the drive motor 1 normally outputs a driving force to drive the measuring plate of the weighing portion 200 to rotate, and the output shaft member 120 rotates in a counterclockwise direction on the plane perpendicular to the output shaft, the sensing portion 821 may be arranged in a counterclockwise direction relative to the measuring touch member 81, so when the output shaft member 120 (an output shaft 1200 and/or the extended shaft sleeve 121) is subjected to a reverse torque, the motor seat will generate a movement trend of a counterclockwise direction, and the measuring touch member 81 also has a movement trend of a counterclockwise direction; due to blocking of the sensing portion 821 in the counterclockwise direction, the sensing portion 821 is subjected to an acting force applied by the measuring touch member 81, and the mass of the material may be obtained according to the acting force. When observed from the bearing support side, the above may be referred to, and no details will be repeated here. Therefore, when the machine is powered on, the drive motor rotates, and the main shaft of the weighing portion 200 is driven by the synchronous belt to drive the measuring plate of the upper portion to rotate; the powder material falls from the feed port onto the measuring plate, which will cause a Coriolis force to a rotating measuring plate blade, so that a reverse torque will act on the main shaft, and then transmitted to the output shaft of the motor through the synchronous belt so as to be transmitted to the motor seat; the motor seat will have a movement trend of reverse rotation, thereby driving the measuring touch member 81 on the motor seat to push the sensing portion, and the sensor measuring device 82 will detect the torque, and further measure the mass of the material.

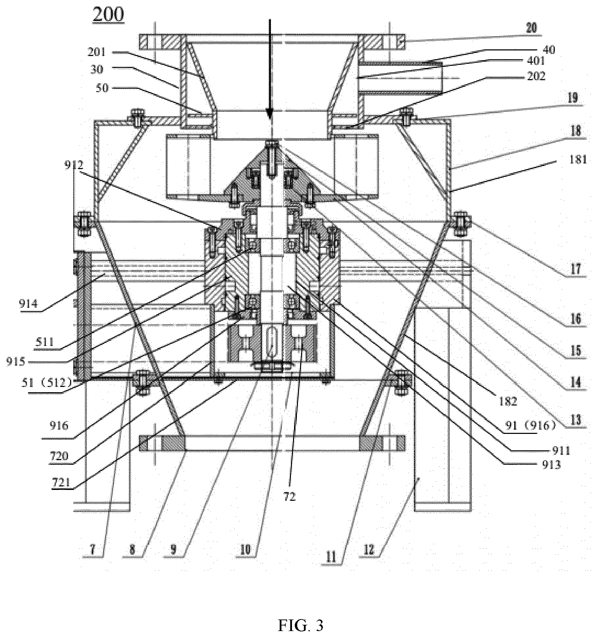

Further, as shown in FIG. 3, the Coriolis weighing scale according to the embodiment of the present disclosure further includes a weighing portion 200, the weighing portion 200 including: a feed member 20, provided with a feed port 201 for the material to enter, and located upstream of a material travel direction, wherein the material travel direction is a direction shown by an arrow; a protective housing body 30, arranged at an outer side of the feed member 20 along a circumferential direction; a connecting pipe 40, coupled to the protective housing body 30, and having an opening 401 facing a space between the feed member and the protective housing body; a measuring plate 14, arranged below the feed member 20 along the material travel direction; wherein an air passage is formed between the protective housing body 30 and the feed member 20; the connecting pipe 40 is configured to force compressed air into an end portion 202 of the feed member 20 that is located on a side of the measuring plate 14 through the air passage; and the driving portion 100 is arranged outside the weighing portion 200.

For example, the weighing portion 200 may further include a flow guide member 50, arranged between the feed member 20 and the protective housing body 30 on a side of the feed member 20 that is close to the measuring plate, and located in the air passage.

For example, in the material travel direction, the flow guide member 50 may be provided with two layers; the flow guide member 50 may be arranged to extend from an inner wall of the protective housing body 30 in a radial direction toward the feed member 20 or extend from an outer wall of the feed member 20 in the radial direction toward the protective housing body 30, so that when the compressed air enters from the connecting pipe 40, the flow guide member may guide the air to a joint between the feed member 20 and the measuring plate 14, which may prevent the material from overflowing out of the joint, and can avoid local turbulence of the material at the entrance of the measuring plate, so that the material flows out faster, to improve measuring accuracy.

For example, the flow guide member 50 may be a guide vane or other component having a flow guiding function; at least two layers of guide vanes may be provided, which are sequentially arranged on the inner wall of the protective housing body 30 or the outer wall of the feed member 20 along an extension direction of the main shaft; the guide vane extends from the protective housing body to the side wall of the feed member or extends from the outer wall of the feed member to the side wall of the protective housing body, which, thus, can well guide the air entering from the connecting pipe 40.

For example, in the Coriolis weighing scale according to the embodiment of the present disclosure, the weighing portion 200 may further include: a housing body 18, located at an outermost side of the weighing portion and fixedly connected with the protective housing body 30, for example, by screws, bolts, flanges, etc.; a main shaft 9, coaxially and fixedly connected with the measuring plate 14 and configured to drive the measuring plate 14 to rotate; a main shaft seat 91, provided with a shaft hole 911 for the main shaft 9 to run through; a cover 912, arranged on a side of the main shaft seat 91 that is located at the measuring plate 14 and forming a closed space 913 together with the main shaft seat 91; a pipe member 914, the pipe member 914 extending from an outer wall of the main shaft seat to the housing body, with one end fixedly coupled to the main shaft seat 91 and the other end fixedly coupled to the housing body 18, and configured such that the closed space 913 is in communication with the outside of the housing body 18.

For example, in conjunction with FIG. 2 and FIG. 3, the weighing portion 200 includes at least two of the pipe members; the at least two pipe members are arranged along a circumferential direction of the housing body, wherein one pipe member 9141 is configured to pass compressed air into the closed space to keep the main shaft seat at positive pressure, with 921 as a joint, so as to prevent dust and other materials from entering the main shaft seat and contaminating the bearing; the other pipe member 9142 is configured to fill the closed space with lubricating oil, 923 is an oil cup, and the pipe member may be an air displacement oil injecting opening; when adding the lubricating oil, a sealing cover is opened, the air in the main shaft seat is led out, the lubricating oil is injected through the oil injecting opening, and the sealing cover is pressed tightly to complete oiling. One of the at least two pipe members may also be a temperature measuring pipe member, the pipe member is externally connected with a temperature measuring element, for example, a thermocouple, to monitor temperature of a bearing seat in real time, so as to ensure normal operation of the weighing portion 200. For example, the at least two pipe members may extend outward along a radial direction of the main shaft seat; the at least two pipe members may be arranged at equal intervals in a circumferential direction of the main shaft seat 91 and extend outward along the radial direction of the main shaft seat 91; and the at least two pipe members may be located on a same plane perpendicular to the main shaft 9. For example, an end of the pipe member 9141 that is located outside the housing body may be provided with a threaded connecting port, so that it may be connected with an external device through the joint 921 to pass the compressed air into the closed space 913, so as to avoid dust from entering the bearing; an end portion of the pipe member 9142 that is located outside the housing body may be provided with the oil cup 923, so that the lubricating oil for lubricating the bearing may be applied to the closed space through the same.

For example, the weighing portion 200 may further include a third bearing 51, arranged between the main shaft seat and the main shaft, and accommodated in the closed space 913.

For example, the main shaft 9 may be a column, for example, a cylinder, a prism, etc., which will not be limited in the embodiment of the present disclosure, and those skilled in the art may set as needed. The main shaft 9 may be a smooth column, or may also be formed with a stepped outer wall, so as to facilitate positioning components such as the bearing.

For example, in order to facilitate mounting or to better seal the closed space 913, a cover plate 916 may be further provided on a side of the main shaft seat that is away from the measuring plate; and the cover plate 916 is fixed to the main shaft seat 91, for example, by riveting, screwing, bolting, clamping, etc. In this way, after the components such as the third bearing 51 and the sleeves for spacing apart different bearings are mounted, the cover plate may be added on the side of the main shaft seat that is away from the measuring plate.

For example, the third bearing 51 may include at least two third sub-bearings arranged along the main shaft; the at least two third sub-bearings are spaced apart by a sleeve; the sleeve may be positioned by a step, for example, a shaft shoulder on the main shaft 9, so as to space apart the at least two third sub-bearings. For convenience of showing examples, FIG. 3 shows two third sub-bearings 511 and 512; an upper end face of the third sub-bearing 511 may be positioned by the cover 912 and/or positioned by the step on the main shaft 9 and/or positioned by a stop baffle additionally provided, which will not be limited in the embodiment of the present disclosure. For example, an upper end face of an inner ring of the third sub-bearing 511 is in a stop fit with the step of the main shaft 9; an upper end face of an outer ring may be in a stop fit with the main shaft seat or the stop baffle; a lower end face of the outer ring may be in a stop fit with the main shaft seat and/or the sleeve, for example, the lower end face of the outer ring is in a stop fit with the main shaft seat, and the remaining lower end face is in a stop fit with the sleeve. An upper end face of the third sub-bearing 512 may be in a stop fit with the main shaft seat and/or the sleeve, for example, an upper end face of an outer ring may be in a stop fit with the main shaft seat and/or the remaining upper end face or an upper end face of an inner ring may be in a stop fit with the sleeve; a lower end face may be in a stop fit with the stop baffle and/or the main shaft seat and/or the cover plate, for example, the lower end face may be in a stop fit with a side face of a protruding portion of the main shaft seat that faces the closed space and/or the cover plate and/or the stop baffle additionally provided. In this way, the third bearing 51 may be positioned in the closed space 913, and through stop fit, the third bearing is prevented from moving up and down.

For example, for convenience of mounting, the main shaft seat 91 may include a first portion 915 and a second portion 916 which are sleeved to be fixed together; the second portion 916 may be on an outer side of the first portion 915 along a radial direction; and the pipe member 914 has to run through both the first portion and the second portion, and opened to the closed space for accommodating the main shaft inside the main shaft seat. The first portion 915 and the second portion 916 are fixed to each other by screwing, bolting, clamping, etc.; for example, the first portion 915 may be provided thereon with a clamp slot, the second portion 916 may be provided with a buckle, and the two may be fixed by clamping, and/or may be fixedly fitted by screws or bolts. The cover 912 and the cover plate 916 may be fixed to both the first portion 915 and the second portion 916, for example, by screwing, bolting, clamping, etc.

Here, it should be noted that, in order to prevent material powder, etc. from entering the main shaft seat and contaminating its internal bearing, joint faces of different components may be provided with sealing members, for example, elastic tapes, rubber rings, felt pads, etc., for example, a joint face between the protective housing body 30 and the housing body 18 may be provided with a felt pad, and a joint face of the cover plate and the main shaft and a joint face of the cover and the main shaft seat may also be provided with a felt pad.

For example, as shown in FIG. 3, the weighing portion 200 may further include: a second pulley accommodating portion 720, opened thereon with a belt hole for the synchronous belt 6 to run through; and a pulley cover plate 721, arranged on a side of the second pulley accommodating portion 720 that faces away from the feed member 20, so that the second pulley accommodating portion 720, the pulley cover plate 721, an end face of the main shaft seat 91 that are located on an opposite side of the measuring plate 14 and the cover plate 916 jointly constitute a space for accommodating the second pulley.

For example, the pulley cover plate 721 is fixed to the second pulley accommodating portion 720 by screwing, clamping, riveting, etc.; and the second pulley accommodating portion 720 is fixed to the main shaft seat 91 by screwing, clamping, riveting, etc.

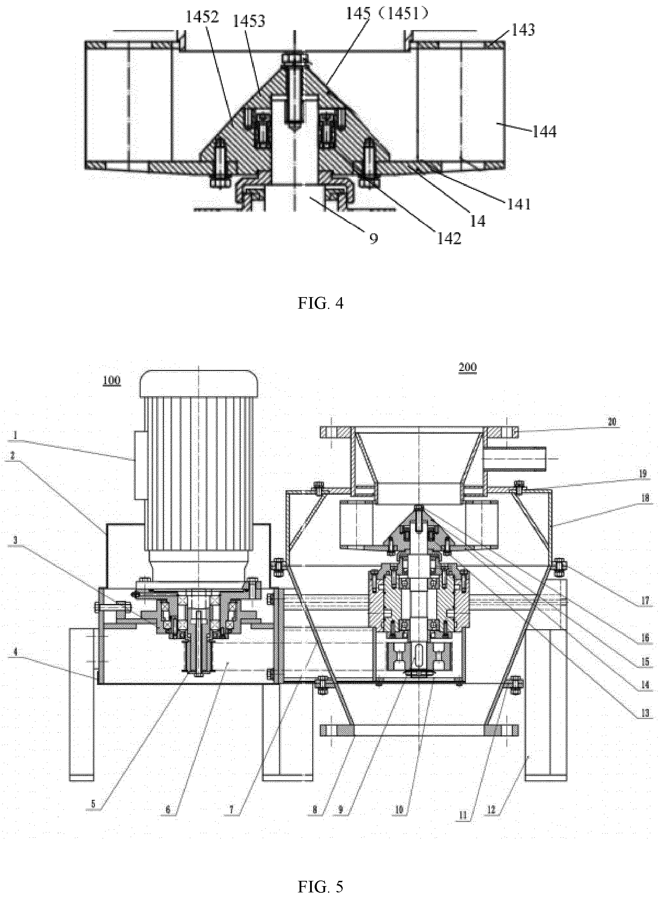

For example, in the weighing portion according to the embodiment of the present disclosure, as shown in FIG. 4, the measuring plate 14 may include: a wheel disc 141, in which a shaft hole 142 for the main shaft to run through is provided; an end ring 143, arranged on a side of the wheel disc 141 that faces the feed member 20; and a plurality of blades 144, arranged between the wheel disc 141 and the end ring 143 along a circumferential direction of the measuring plate 14.

For example, the weighing portion 200 may further include: a material guide member 145, fixedly coupled to a top end of the main shaft 9, arranged at a central axis position of the shaft hole 142 of the wheel disc 141, and extending between a boundary of the feed member and the measuring plate and the wheel disc.

For example, as shown in FIG. 3 and FIG. 4, the material guide member 145 includes a guide cone 1451; the guide cone is coaxial with the measuring plate 14; the guide cone 1451 includes: a cone bottom portion 1452, whose center is opened with a through hole for the main shaft 9 to run through, the main shaft 9 and the cone bottom portion 1452 being in an anti-rotating fit, which may be, for example, clamping or arranging a tension sleeve 13 between the main shaft 9 and the cone bottom portion 1452, wherein the measuring plate 14, through tightening of the tension sleeve 13, is fixed to the central axis to rotate together, and the cone bottom portion 1452 is fixed to the wheel disc 141, for example, by bolts, screws, etc.; and a cone tip portion 1453, arranged on a side of the cone bottom portion 1452 that is located at the feed member 20 and fixed to a top end of the main shaft.

For example, the top end of the main shaft 9 may be opened with a threaded hole; the cone tip portion 1453 may be fixedly connected with the main shaft 9 by a bolt; and the cone bottom portion and the cone tip portion may be connected together by a screw, a bolt, a buckle, etc., for example, the cone bottom portion may be provided with a clamp slot, the cone tip portion may be provided with a buckle, and the two are clamped to implement fixed connection. For example, the cone bottom portion may be fixed to the wheel disc 141 of the measuring plate 14, so as to fix the measuring plate to the main shaft; and when the main shaft 9 rotates, the main shaft can drive the measuring plate 14 and the material guide member 145 to rotate together.

For example, the material guide member 145 may also be an integrated guide cone, wherein a groove into which the main shaft may be inserted is formed; the top end of the main shaft and a tip portion of the guide cone are opened with screw holes; a bolt may run through both the main shaft and the guide cone to fix the main shaft and the guide cone. A bottom portion of the guide cone and the wheel disc of the measuring plate are fixed together, and the guide cone or the wheel disc is fixed to the main shaft through a tension sleeve.

For example, the main shaft, the measuring plate, the guide cone, the main shaft seat, the feed port, and a discharge port may be centrosymmetrical and may be arranged coaxially, that is, an axis of the main shaft may run through a center of the measuring plate, and centers of the feed port and the discharge port, so that operation may proceed smoothly, which improves measuring accuracy, and is more favorable for measuring a small-flow material.

For example, in order to prevent the material from affecting operation of the synchronous belt 6, the weighing portion may further include a hollow tube accommodating the synchronous belt 6; in the weighing portion, the hollow tube has one end in communication with the second pulley accommodating portion 720, and the other end in communication with the outside of the housing body, so that the synchronous belt located on the second pulley is led out through the hollow tube and mounted on the first pulley.

For example, the housing body 18 of the weighing portion 200 may include at least two sub-housing bodies fixedly connected with each other, for example, may include an upper sub-housing body 181 and a lower sub-housing body 7; a lower end of the upper sub-housing body 181 and an upper end of the lower sub-housing body 7 are each provided with a turning edge; the two are fixed together by mounting bolts through the turning edges; the upper sub-housing body 181 and the lower sub-housing body 7 are in a sealed fit; and a joint face may be provided with a sealing member, for example, a felt pad, a rubber pad, an elastic tape, a rubber ring, etc.

Alternatively, the housing body 18 may further include an intermediate housing body, arranged between the upper sub-housing body and the lower sub-housing body, and having an upper end in a sealed fit with the upper sub-housing body, and a lower end in a sealed fit with the lower sub-housing body. Those skilled in the art may select an appropriate number of sub-housing bodies as needed.

For example, the feed member 20 may be divided into two portions; an upper portion is a cone portion tapered from the feed port toward the material travel direction; and a lower portion may be a column, which is favorable for entry of the material. An upper end of the feed member 20 may have a turning edge, which is fixed together with a turning edge of an upper end of the protective housing body 30 by a bolt; a lower end outer wall of the feed member may be fixed together with the protective housing body 30 by a fixing member; a lower end of the protective housing body 30 has a long turning edge, and is fixedly coupled to the upper sub-housing body 181 through the turning edge; and the fixedly connected positions are all provided with felt pads for sealing.

For example, in the weighing portion 200, an end of the housing body 18 that is away from the feed port is provided with a discharge port 8, for example, an end of the lower sub-housing body 7 that is not fixedly coupled to the upper sub-housing body 181 may be formed with an opening and taken as the discharge port 8, or a component may be additionally provided and fixed to the lower sub-housing body 7 to form the discharge port 8, and the component may present a tapered cone shape along the material travel direction to facilitate outflow of the material; an upper end of the component and a lower end of the lower sub-housing body 7 may be formed with turning edges; the two are fixedly connected by screws running through the turning edges; and a sealing member, such as a felt pad, is provided at a joint face of the two.

For example, the lower sub-housing body 7 may present a tapered cone shape in the material travel direction; a height of a junction between the lower sub-housing body 7 and the upper sub-housing body 181 may be slightly lower than a position where the measuring plate is located, so after the material is thrown out from a side face of the measuring plate, it will enter a space enclosed by the lower sub-housing body 7; in this way, in order to facilitate outflow of the material, the lower sub-housing body 7 may also be set as a tapered cone in the material travel direction, for example, the upper sub-housing body 181 may present a straight tubular shape; and those skilled in the art may select appropriate shapes for the housing body and respective portions of the housing body as needed, which will not be limited in the embodiment of the present disclosure.

For example, the Coriolis weighing scale according to the embodiment of the present disclosure may further include: a control system 300, including: a processor 301, in signal connection with the sensor measuring device 82, and configured to calculate the mass of the material to be measured according to an electrical signal converted by the sensor measuring device 82 using an acting force; and a memory 302, storing instructions therein, executing the above-described actions when the processor 301 executes the instructions, and storing mass data of the material to be measured.

For example, the processor 301 may further be configured to control rotation of the drive motor to drive the measuring plate to rotate. Alternatively, the control system 300 may be arranged inside the outer housing body of the driving portion 100 or inside the outer cover, or may be separately arranged outside to control the driving portion 100, which will not be limited in the embodiment of the present disclosure, and those skilled in the art may set as needed.

For example, FIG. 5 shows an exemplary cross-sectional schematic diagram of the Coriolis weighing scale including the driving portion and the weighing portion; as shown in FIG. 5, the driving portion and the weighing portion may be fixed together by screws, bolts, etc.; for example, the outer housing body and/or the outer cover of the driving portion may be fixedly connected with the housing body of the weighing portion, for example, by screws, buckles, etc. In order to stably support the entire Coriolis weighing scale including the driving portion and the weighing portion, legs may further be provided, for example, at least four legs 12 may be provided.

For example, the pipe member 914 of the weighing portion 200 may also run through the housing body 18 and run through a transverse pipe provided above the leg 12 to lead to the outside; and a joint or an oil cup, etc. is provided at an end of the transverse pipe and the pipe member that is away from the weighing portion 200.

For example, as shown in FIG. 5, the outer housing body 4 and the outer cover 2 of the driving portion 100 are fixedly connected with the housing body 18 of the weighing portion 200 by screws; and a side of the outer housing body of the driving portion 100 that is close to the weighing portion 200 may be fixedly coupled onto a housing body that is above the leg 12 and provided therein with the pipe member running through the housing body of the weighing portion 200, and here, the driving portion 100 and the weighing portion 200 may share a leg 12, above which the outer cover 2 of the driving portion may be fixedly coupled to the housing body 18 of the weighing portion 200 through a turning edge.

Hereinafter, an operation process of the Coriolis weighing scale according to the embodiment of the present disclosure will be exemplarily described in conjunction with FIG. 5: after the Coriolis weighing scale is started, the output shaft 1200 and the extended shaft sleeve 121 of the drive motor 1 rotate, driving the first pulley 71 fixed to the output shaft 1200 and the extended shaft sleeve 121 to rotate, thereby driving, through the synchronous belt 6, the second pulley 72 of the weighing portion 200 to rotate, further driving the main shaft 9 to rotate, and driving the upper measuring plate 14 to rotate. The powder enters the scale body from the feed port 201, falling from the upper portion to the guide cone 1451, and then distributed onto the measuring plate; due to an inertia effect, the relatively static powder will exert a reverse Coriolis force to the rotating measuring plate blade, so that a reverse torque will act on the main shaft 9; through connection of the synchronous belt 6, the output shaft member 120 of the drive motor will also be subjected to the reverse torque; since the motor seat rotates freely in the radial direction, the motor seat will generate a movement trend of positive rotation, driving the measuring touch member fixed on the motor seat to exert a thrust on the sensor measuring device; the sensor measuring device will detect the thrust, convert a thrust signal into an electrical signal, and transmit the same to the control system 300; and the processor of the control system calculates the mass of the material through a certain algorithm.

In the weighing portion of the Coriolis weighing scale provided by the embodiment of the present disclosure, the measuring plate is located directly below the feed port; the main shaft built in the weighing portion drives the measuring plate to rotate; the main shaft is arranged in the main shaft seat; and the main shaft seat adopts at least two bearings arranged up and down, so that the bearing support is adopted instead of the complicated gear box structure; as compared with the gear box structure that has a large number of parts and components, has high precision and great difficulties in processing and assembly, and requires regular replacement of lubricating oil, the bearing structure adopted by the present application has a simple structure with a small number of parts and components, has better sealing and lubricating conditions, and greatly reduces difficulties in production and assembly, which is not only simple and practical, but also reduces fabrication costs and subsequent maintenance and overhaul costs. Moreover, the sensor measuring device and the driving portion are side-arranged on an outer side of the measuring chamber, which further reduces difficulties in assembly, is easy to repair and replace, and saves maintenance costs.

In the driving portion of the Coriolis weighing scale provided by the embodiment of the present disclosure, the motor seat is arranged on the outer side of the output shaft member (the output shaft and/or the extended shaft sleeve) of the drive motor in the radial direction, and the bearing support is arranged on the outer side of the motor seat in the radial direction, while the output shaft of the drive motor and/or the extended shaft sleeve thereof fits with the motor seat through the first bearing, and the motor seat fits with the bearing support through the second bearing, so with respect to the bearing support, the drive motor and the motor seat are integrally in fit connection with the bearing support through the second bearing, the first bearing between the output shaft of the drive motor and/or the extended portion of the shaft and the motor seat becomes an internal bearing of the drive motor in structure, and a friction force between them becomes an internal force, so that when measuring the material mass subsequently, a torque force that causes reverse rotation of the output shaft of the drive motor and the motor seat will not be affected, which makes measuring accuracy higher and is suitable for measuring mass of a small-flow material.

Further, in the weighing portion, the connecting pipe for the compressed air to pass through is provided at the feed member, so when the material enters, the compressed air may be passed into the connecting pipe, and the compressed air may be further passed through the flow guide member, so that the compressed air may be guided to the joint between the feed member and the measuring plate, which may prevent the material from overflowing out of the joint, and can avoid local turbulence of the material at the entrance of the measuring plate, so that the material flows out faster, thereby improving measuring accuracy.

Further, in the weighing portion, the pipe members are provided in the circumferential direction of the main shaft seat; one of the pipe members may be an oil injecting opening; since the bearing according to the present application adopts multi-channel sealing and is fed with compressed air, the closed space in the main shaft seat has certain positive pressure which may prevent dust from entering the bearing; when lubricating the bearing by using a conventional method, the lubricating oil cannot be pumped in, but the lubricating oil inside may be pressed out; the pipe member may be an air displacement oil injecting opening; when adding the lubricating oil, a sealing cover is opened, the air in an internal space of the main shaft seat is led out, the lubricating oil is injected through the oil injecting opening, and the sealing cover is pressed tightly to complete oiling, which is favorable for device maintenance and improving measuring accuracy.

Further, the Coriolis weighing scale according to the embodiment of the present disclosure uses a motor as a power source, and does not include a geared motor, which reduces transmission link and reduces friction force of the system. In addition, since the gear box of the geared motor is lubricated by being immersed in oil, the lubricating oil has variable resistance to gears, and the resistance affects the measurement force and is unfavorable for measuring accuracy; by avoiding use of a geared motor, influence of the gear box of the geared motor on measuring accuracy is eliminated, which further improves measuring accuracy and is more favorable for measurement of the mass of the small-flow material.

Further, by adopting measures such as changing the bearing between the motor seat and the output shaft member into the internal bearing of the motor, placing the driving portion outside the weighing portion, and avoiding use of the geared motor, the Coriolis weighing scale according to the embodiment of the present disclosure has an overall structure more solid and can withstand a pressure of 1 MPa.

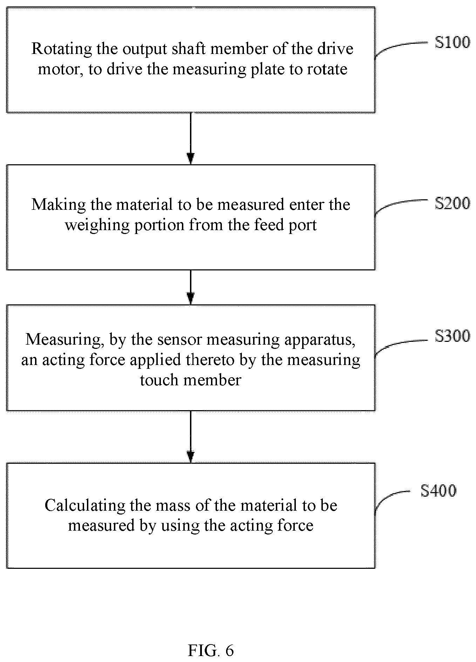

An embodiment of the present disclosure further provides a weighing method adopting the above-described Coriolis weighing scale, as shown in FIG. 6, including steps of:
S100: rotating the output shaft member of the drive motor, to drive the measuring plate to rotate;
S200: making material to be measured enter the weighing portion from the feed port;
S300: measuring, by the sensor measuring device, an acting force applied to the sensor measuring device by the measuring touch member;
S400: calculating the mass of the material to be measured by using the acting force.

For example, while making the material to be measured enter the weighing portion from the feed port, the weighing method further includes: passing compressed air through the connecting pipe.

For example, the weighing method may further include: adding lubricating oil to the closed space of the main shaft seat, including: leading out the compressed air in the closed space through the air displacement oil injecting opening; and injecting, by the air displacement oil injecting opening, the lubricating oil into the closed space.

For example, the calculating the mass of the material to be measured by using the acting force may include: converting the acting force into an electrical signal, and calculating the mass of the material to be measured by using the electrical signal.

The weighing method according to the embodiment of the present disclosure, by adopting any of the above-described Coriolis weighing scale, can improve measuring accuracy, and can measure mass of a small-flow material, thereby having a wider application range.

The following statements should be noted:
(1) The accompanying drawings involve only the structure(s) in connection with the embodiment(s) of the present disclosure, and other structure(s) can be referred to common design(s).
(2) For the purpose of clarity only, in accompanying drawings for illustrating the embodiment(s) of the present disclosure, the thickness of a layer or a region may be enlarged or reduced, that is, the accompanying drawings are not drawn according to the actual scale. It can be understood that when a component such as a layer, a film, a region or a substrate is called as being positioned "above" or "under" another component, the component may be directly positioned "above" or "under" another component or there is an intermediate component disposed between the component and the another component.
(3) In case of no conflict, features in one embodiment or in different embodiments can be combined to obtain a new embodiment.

What are described above is related to the specific embodiments of the disclosure only and not limitative to the scope of the disclosure. The protection scope of the disclosure shall be based on the protection scope of the claims.

## Claims

1. A Coriolis weighing scale, comprising a weighing portion (200),
wherein the weighing portion (200) includes:
a feed member (20), provided with a feed port (201) for a material to enter, and located upstream of a material travel direction;
a protective housing body (30), arranged at an outer side of the feed member (20) along a circumferential direction;
a connecting pipe (40), coupled to the protective housing body (30), and having an opening facing a space between the feed member (20) and the protective housing body (30); and
a measuring plate (14), arranged below the feed member (20) along the material travel direction;
wherein an air passage is formed between the protective housing body (30) and the feed member (20), the connecting pipe (40) is configured to pass compressed air at an end portion of the feed member (20) that is located on a side of the measuring plate (14) through the air passage,
**characterized in that**
the weighing portion (200) further includes:
a housing body (18), located at an outermost side of the weighing portion (200) and fixedly connected with the protective housing body (30);
a main shaft (9), coaxially and fixedly connected with the measuring plate (14) and configured to drive the measuring plate (14) to rotate;
a main shaft seat (91), provided with a shaft hole for the main shaft (9) to run through;
a cover (912), arranged on a side of the main shaft seat (91) that is located at the measuring plate (14) and forming a closed space together with the main shaft seat (91); and
a pipe member (914), extending from an outer wall of the main shaft seat (91) toward the housing body (18), one end of the pipe member (914) being fixedly coupled to the main shaft seat (91) and an other end of the pipe member (914) being fixedly coupled to the housing body (18), and the pipe member (914) being configured such that the closed space is in communication with outside of the housing body (18),
wherein the weighing portion (200) includes at least two of the pipe members (914), the at least two pipe members (914) are arranged along a circumferential direction of the housing body (18), one of the at least two pipe members (914) is configured to pass compressed air into the closed space, and one of the at least pipe members (914) is configured to fill the closed space with lubricating oil.

2. The Coriolis weighing scale according to claim 1, wherein the weighing portion (200) further includes:
a flow guide member (50), arranged between the feed member (20) and the protective housing body (30) on a side of the feed member (20) that is close to the measuring plate (14), and located in the air passage.

3. The Coriolis weighing scale according to claim 1, further comprising a driving portion (100),
wherein the driving portion (100) includes:
an outer housing body (4), an accommodating space (410) being defined inside the outer housing body (4);
a drive motor (1), having a base (110) and an output shaft member (120), at least a portion of the drive motor (1) being arranged outside the outer housing body (4);
a motor seat (21), fixed to the base (110) of the drive motor (1) and having a first shaft hole (210), the output shaft member (120) running through the first shaft hole (210); and
a bearing support (3), arranged at an outer side of the motor seat (21) along a radial direction and having a second shaft hole (310),
wherein the motor seat (21) and the bearing support (3) are arranged in the accommodating space (410), the bearing support (3) is fixed to the outer housing body (4), the first shaft hole (210) and the second shaft hole (310) are coaxial, a first bearing (31) is provided between a side wall of the first shaft hole (210) of the motor seat (21) and the output shaft member (120), and a second bearing (41) is provided between an outer wall of the motor seat (21) and a side wall of the second shaft hole (310) of the bearing support (3),
the driving portion (100) is arranged outside the weighing portion (200).

4. The Coriolis weighing scale according to claim 1, wherein the measuring plate (14) includes:
a wheel disc (141), a shaft hole for the main shaft (9) to run through being provided in the wheel disc (141);
an end ring (143), arranged on a side of the wheel disc (141) that faces the feed member (20); and
a plurality of blades (144), arranged between the wheel disc (141) and the end ring (143) along a circumferential direction of the measuring plate (14),
wherein the weighing portion (200) further includes:
a material guide member (145), fixedly coupled to a top end of the main shaft (9), arranged at a central axis position of the shaft hole of the wheel disc (141), and extending between a boundary of the feed member (20) and the measuring plate (14) and the wheel disc (141).

5. The Coriolis weighing scale according to claim 4, wherein the material guide member (145) includes a guide cone (1451), the guide cone (1451) is coaxial with the measuring plate (14),
the guide cone (1451) includes:
a cone bottom portion (1452), a through hole for the main shaft (9) to run through being formed in a center of the cone bottom portion (1452), the main shaft (9) being clamped with the cone bottom portion (1452), and the cone bottom portion (1452) being fixed to the wheel disc (141); and
a cone tip portion (1453), arranged on a side of the cone bottom portion (1452) that is located at the feed member (20) and fixed to the top end of the main shaft (9).

6. The Coriolis weighing scale according to any one of claims 1 to 5, wherein the weighing portion (200) further includes:
a third bearing (51), arranged between the main shaft seat (91) and the main shaft (9) and accommodated in the closed space (913).

7. The Coriolis weighing scale according to claim 6, wherein the third bearing (51) includes at least two third sub-bearings (511,512) arranged along the main shaft (9), and the at least two third sub-bearings (511,512) are spaced apart by a sleeve.

8. The Coriolis weighing scale according to any one of claims 1 to 7, wherein the weighing portion (200) further includes:
a second pulley (72), arranged on a side of the main shaft (9) that is opposite to the measuring plate (14) and fixedly connected with the main shaft (9),
the output shaft member (120) includes an output shaft (1200) and an extended shaft sleeve (121), and the extended shaft sleeve (121) is fixed on the output shaft (1200),
the driving portion (100) further includes:
a first pulley (71), fixed to the extended shaft sleeve (121) and a synchronous belt (6) being disposed on the first pulley (71),
the outer housing body (4) is provided with a through hole for the synchronous belt (6) to run through; and the first pulley (71) and the second pulley (72) are connected by the synchronous belt (6), so that the drive motor (1) drives the main shaft (9) to rotate.

9. The Coriolis weighing scale according to claim 8, wherein the weighing portion (200) further includes:
a second pulley accommodating portion (720), a belt hole for the synchronous belt (6) to run through being formed in the second pulley accommodating portion (720); and
a pulley cover plate (721), arranged on a side of the second pulley accommodating portion (720) that faces away from the feed member (20), so that the second pulley accommodating portion (720), the pulley cover plate (721), an end face of the main shaft seat (91) that are located on an opposite side of the measuring plate (14) jointly constitute a space for accommodating the second pulley (72).

10. The Coriolis weighing scale according to claim 1, wherein the first bearing (31) includes at least two first sub-bearings (311, 312) arranged up and down along the output shaft member (120), the at least two first sub-bearings (311, 312) are spaced apart by a sleeve in an extension direction of the output shaft member (120), the second bearing (41) includes at least two second sub-bearings (411,412) arranged up and down along the output shaft member (120), and the at least two second sub-bearings (411,412) are spaced apart by another sleeve.

11. The Coriolis weighing scale according to any one of claims 1 to 9, wherein a discharge port (8) is disposed at an end of the housing body (18) that is away from the feed port (201), and the housing body (18) includes at least two sub-housing bodies fixedly connected with each other.

12. A weighing method, adopting the Coriolis weighing scale according to any one of claims 1 to 11, comprising steps of:
rotating the output shaft member (120) of the drive motor (1), to drive the measuring plate (14) to rotate;
making the material to be measured enter the weighing portion (200) from the feed port (201);
measuring, by the sensor measuring device (82), an acting force applied to the sensor measuring device (82) by the measuring touch member (81);
calculating the mass of the material to be measured by using the acting force,
**characterized in that**
while making the material to be measured enter the weighing portion (200) from the feed port (201), further comprising:
passing compressed air through the connecting pipe (40);
the weighing method further comprising:
adding lubricating oil into the closed space (913) of the main shaft seat (91), including:
leading out compressed air in the closed space (913) through an air displacement oil injecting opening; and
injecting, by the air displacement oil injecting opening, the lubricating oil into the closed space (913).

13. The weighing method according to claim 12, wherein the calculating the mass of the material to be measured by using the acting force includes:
converting the acting force into an electrical signal; and
calculating the mass of the material to be measured by using the electrical signal.

## Patentansprüche

1. Coriolis-Waage, umfassend einen Wiegebereich (200),
wobei der Wiegebereich (200) umfasst:
ein Zuführungselement (20), das mit einer Zuführungsöffnung (201) für den Eintritt von Material versehen ist und stromaufwärts einer Materiallaufrichtung angeordnet ist;
einen Schutzgehäusekörper (30), der an einer Außenseite des Zuführungselements (20) entlang einer Umfangsrichtung angeordnet ist;
ein Verbindungsrohr (40), das mit dem Schutzgehäusekörper (30) verbunden ist und eine Öffnung aufweist, die einem Raum zwischen dem Zuführungselement (20) und dem Schutzgehäusekörper (30) zugewandt ist; und
eine Messplatte (14), die entlang der Materiallaufrichtung unterhalb des Zuführungselements (20) angeordnet ist;
wobei zwischen dem Schutzgehäusekörper (30) und dem Zuführungselement (20) ein Luftkanal ausgebildet ist, wobei das Verbindungsrohr (40) so ausgebildet ist, dass es Druckluft an einem Endabschnitt des Zuführungselements (20), der sich auf einer Seite der Messplatte (14) befindet, durch den Luftkanal leitet,
**dadurch gekennzeichnet, dass**
der Wiegebereich (200) ferner umfasst:
einen Gehäusekörper (18), der an einer äußersten Seite des Wiegebereichs (200) angeordnet und fest mit dem Schutzgehäusekörper (30) verbunden ist;
eine Hauptwelle (9), die koaxial und fest mit der Messplatte (14) verbunden ist und dazu ausgelegt ist, die Messplatte (14) in Drehung zu versetzen;
einen Hauptwellensitz (91), der mit einer Wellenaufnahme für die Hauptwelle (9) versehen ist;
eine Abdeckung (912), die an einer Seite des Hauptwellensitzes (91) angeordnet ist, die sich an der Messplatte (14) befindet, und die zusammen mit dem Hauptwellensitz (91) einen geschlossenen Raum bildet; und
ein Rohrteil (914), das sich von einer Außenwand des Hauptwellensitzes (91) in Richtung des Gehäusekörpers (18) erstreckt, wobei ein Ende des Rohrteils (914) fest mit dem Hauptwellenlager (91) verbunden ist und ein anderes Ende des Rohrteils (914) fest mit dem Gehäusekörper (18) verbunden ist, und wobei das Rohrteil (914) so ausgebildet ist, dass der geschlossene Raum mit der Außenseite des Gehäusekörpers (18) in Verbindung steht,
wobei der Wiegebereich (200) mindestens zwei der Rohrteile (914) umfasst, die mindestens zwei Rohrteile (914) entlang einer Umfangsrichtung des Gehäusekörpers (18) angeordnet sind, eines der mindestens zwei Rohrteile (914) so ausgebildet ist, dass es Druckluft in den geschlossenen Raum leitet, und eines der mindestens zwei Rohrteile (914) so ausgebildet ist, dass es den geschlossenen Raum mit Schmieröl füllt.

2. Coriolis-Waage nach Anspruch 1, wobei der Wiegebereich (200) ferner umfasst:
ein Strömungsleitelement (50), das zwischen dem Zuführungselement (20) und dem Schutzgehäusekörper (30) auf einer Seite des Zuführungselements (20) angeordnet ist, die der Messplatte (14) naheliegt, und sich im Luftkanal befindet.

3. Coriolis-Waage nach Anspruch 1, ferner umfassend einen Antriebsabschnitt (100),
wobei der Antriebsabschnitt (100) umfasst:
einen äußeren Gehäusekörper (4), wobei innerhalb des äußeren Gehäusekörpers (4) ein Aufnahmeraum (410) definiert ist;
einen Antriebsmotor (1) mit einem Sockel (110) und einem Abtriebswellenelement (120), wobei zumindest ein Teil des Antriebsmotors (1) außerhalb des äußeren Gehäusekörpers (4) angeordnet ist;
einen Motorsockel (21), der an der Basis (110) des Antriebsmotors (1) befestigt ist und eine erste Wellenbohrung (210) aufweist, wobei das Abtriebswellenelement (120) durch die erste Wellenbohrung (210) verläuft; und
eine Lagerhalterung (3), die an einer Außenseite des Motorsitzes (21) in radialer Richtung angeordnet ist und eine zweite Wellenbohrung (310) aufweist,
wobei der Motorsitz (21) und der Lagerträger (3) in dem Aufnahmeraum (410) angeordnet sind, der Lagerträger (3) am äußeren Gehäusekörper (4) befestigt ist, die erste Wellenbohrung (210) und die zweite Wellenbohrung (310) koaxial sind, ein erstes Lager (31) zwischen einer Seitenwand der ersten Wellenbohrung (210) des Motorsitzes (21) und dem Abtriebswellenelement (120) vorgesehen ist und ein zweites Lager (41) zwischen einer Außenwand des Motorsitzes (21) und einer Seitenwand der zweiten Wellenbohrung (310) des Lagerträgers (3) vorgesehen ist,
wobei der Antriebsabschnitt (100) außerhalb des Wiegebereichs (200) angeordnet ist.

4. Coriolis-Waage nach Anspruch 1, wobei die Messplatte (14) umfasst:
eine Radscheibe (141), wobei in der Radscheibe (141) eine Wellenbohrung zum Durchführen der Hauptwelle (9) vorgesehen ist;
einen Endring (143), der an einer dem Zuführungselement (20) zugewandten Seite der Radscheibe (141) angeordnet ist; und
eine Vielzahl von Flügeln (144), die zwischen der Radscheibe (141) und dem Endring (143) entlang einer Umfangsrichtung der Messplatte (14) angeordnet sind,
wobei der Wiegebereich (200) ferner umfasst:
ein Materialführungselement (145), das fest mit einem oberen Ende der Hauptwelle (9) verbunden ist, an einer zentralen Achsenposition der Wellenbohrung der Radscheibe (141) angeordnet ist und sich zwischen einer Begrenzung des Zuführungselements (20) und der Messplatte (14) sowie der Radscheibe (141) erstreckt.

5. Coriolis-Waage nach Anspruch 4, wobei das Materialführungselement (145) einen Führungskonus (1451) umfasst, der Führungskonus (1451) koaxial zur Messplatte (14) ist,
der Führungskonus (1451) umfasst:
einen konischen Bodenabschnitt (1452), wobei in der Mitte des konischen Bodenabschnitts (1452) eine Durchgangsbohrung für die Hauptwelle (9) ausgebildet ist, wobei die Hauptwelle (9) mit dem konischen Bodenabschnitt (1452) geklemmt ist und der konische Bodenabschnitt (1452) an der Radscheibe (141) befestigt ist; und
einen Konusspitzenabschnitt (1453), der an einer Seite des Konusbodenabschnitts (1452) angeordnet ist, die sich am Zuführungselement (20) befindet, und am oberen Ende der Hauptwelle (9) befestigt ist.

6. Coriolis-Waage nach einem der Ansprüche 1 bis 5, wobei der Wiegebereich (200) ferner umfasst:
ein drittes Lager (51), das zwischen dem Hauptwellensitz (91) und der Hauptwelle (9) angeordnet und in dem geschlossenen Raum (913) untergebracht ist.

7. Coriolis-Waage nach Anspruch 6, wobei das dritte Lager (51) mindestens zwei dritte Unterlager (511, 512) umfasst, die entlang der Hauptwelle (9) angeordnet sind, und die mindestens zwei dritten Unterlager (511, 512) durch eine Hülse voneinander beabstandet sind.

8. Coriolis-Waage nach einem der Ansprüche 1 bis 7, wobei der Wiegebereich (200) ferner umfasst:
eine zweite Riemenscheibe (72), die auf einer der Messplatte (14) gegenüberliegenden Seite der Hauptwelle (9) angeordnet und fest mit der Hauptwelle (9) verbunden ist,
das Abtriebswellenelement (120) eine Abtriebswelle (1200) und eine verlängerte Wellenhülse (121) umfasst, und die verlängerte Wellenhülse (121) an der Abtriebswelle (1200) befestigt ist,
der Antriebsabschnitt (100) ferner umfasst:
eine erste Riemenscheibe (71), die an der verlängerten Wellenhülse (121) befestigt ist, und einen Synchronriemen (6), der auf der ersten Riemenscheibe (71) angeordnet ist,
der äußere Gehäusekörper (4) mit einer Durchgangsöffnung versehen ist, durch die der Synchronriemen (6) verläuft; und die erste Riemenscheibe (71) und die zweite Riemenscheibe (72) durch den Synchronriemen (6) verbunden sind, so dass der Antriebsmotor (1) die Hauptwelle (9) in Drehung versetzt.

9. Coriolis-Waage nach Anspruch 8, wobei der Wiegebereich (200) ferner umfasst:
einen zweiten Riemenscheibenaufnahmeabschnitt (720), wobei in dem zweiten Riemenscheibenaufnahmeabschnitt (720) eine Riemenöffnung ausgebildet ist, durch die der Synchronriemen (6) verläuft; und
eine Riemenscheibenabdeckplatte (721), die an einer dem Zuführungselement (20) abgewandten Seite des zweiten Riemenscheibenaufnahmeabschnitts (720) angeordnet ist, sodass der zweite Riemenscheibenaufnahmeabschnitt (720), die Riemenscheibenabdeckplatte (721) sowie eine Stirnfläche des Hauptwellensitzes (91), die sich auf einer der Messplatte (14) gegenüberliegenden Seite befinden, gemeinsam einen Raum zur Aufnahme der zweiten Riemenscheibe (72) bilden.

10. Coriolis-Waage nach Anspruch 1, wobei das erste Lager (31) mindestens zwei erste Teillager (311, 312) umfasst, die entlang des Abtriebswellenelements (120) in Auf- und Abrichtung angeordnet sind, wobei die mindestens zwei ersten Teillager (311, 312) durch eine Hülse in einer Verlängerungsrichtung des Abtriebswellenelements (120) voneinander beabstandet sind, das zweite Lager (41) mindestens zwei zweite Unterlager (411, 412) umfasst, die entlang des Abtriebswellenelements (120) in Auf- und Abrichtung angeordnet sind, und die mindestens zwei zweiten Unterlager (411, 412) durch eine weitere Hülse voneinander beabstandet sind.

11. Coriolis-Waage nach einem der Ansprüche 1 bis 9, wobei eine Auslassöffnung (8) an einem Ende des Gehäusekörpers (18) angeordnet ist, das von der Einlassöffnung (201) entfernt ist, und der Gehäusekörper (18) mindestens zwei Untergehäusekörper umfasst, die fest miteinander verbunden sind.

12. Ein Wiegeverfahren unter Verwendung der Coriolis-Waage gemäß einem der Ansprüche 1 bis 11, umfassend die folgenden Schritte:
Drehen des Abtriebswellenelements (120) des Antriebsmotors (1), um die Messplatte (14) in Drehung zu versetzen;
Einleiten des zu messenden Materials in den Wiegebereich (200) über die Zuführöffnung (201);
Messen einer auf die Sensor-Messvorrichtung (82) durch das Messberührungselement (81) ausgeübten Kraft mittels der Sensor-Messvorrichtung (82);
Berechnen der Masse des zu messenden Materials unter Verwendung der einwirkenden Kraft,
**dadurch gekennzeichnet, dass**
während das zu messende Material von der Zuführöffnung (201) in den Wiegebereich (200) gelangt, ferner umfassend:
Leiten von Druckluft durch das Verbindungsrohr (40);
wobei das Wiegeverfahren ferner umfasst:
Einbringen von Schmieröl in den geschlossenen Raum (913) des Hauptwellensitzes (91), einschließlich:
Ableiten von Druckluft aus dem geschlossenen Raum (913) durch eine Luftverdrängungs-Öleinspritzöffnung; und
Einspritzen des Schmieröls in den geschlossenen Raum (913) durch die ÖlEinspritzöffnung für die Luftverdrängung.

13. Wiegeverfahren nach Anspruch 12, wobei das Berechnen der Masse des zu messenden Materials unter Verwendung der einwirkenden Kraft umfasst:
Umwandeln der einwirkenden Kraft in ein elektrisches Signal; und
Berechnen der Masse des zu messenden Materials unter Verwendung des elektrischen Signals.

## Revendications

1. Balance de pesage à effet Coriolis, comprenant une partie pesage (200),
dans laquelle la partie pesage (200) inclut :
un organe d'alimentation (20), pourvu d'un orifice d'alimentation (201) pour l'entrée d'un matériau, et situé en amont d'une direction de déplacement de matériau ;
un corps de logement de protection (30), agencé sur un côté externe de l'organe d'alimentation (20) le long d'une direction circonférentielle ;
un tuyau de raccordement (40), couplé au corps de logement de protection (30), et présentant une ouverture orientée vers un espace entre l'organe d'alimentation (20) et le corps de logement de protection (30) ; et
une plaque de mesure (14), agencée sous l'organe d'alimentation (20) le long de la direction de déplacement de matériau ;
dans laquelle un passage d'air est formé entre le corps de logement de protection (30) et l'organe d'alimentation (20), le tuyau de raccordement (40) est configuré pour faire passer de l'air comprimé sur une partie d'extrémité de l'organe d'alimentation (20) qui est située sur un côté de la plaque de mesure (14) à travers le passage d'air,
**caractérisée en ce que**
la partie pesage (200) inclut en outre :
un corps de logement (18), situé sur un côté le plus externe de la partie pesage (200) et relié fixement au corps de logement de protection (30) ;
un arbre principal (9), relié de manière coaxiale et fixement à la plaque de mesure (14) et configuré pour entraîner en rotation la plaque de mesure (14) ;
un siège d'arbre principal (91), pourvu d'un orifice d'arbre pour le passage de l'arbre principal (9) ;
un couvercle (912), agencé sur un côté du siège d'arbre principal (91) qui est situé sur la plaque de mesure (14) et formant un espace fermé conjointement avec le siège d'arbre principal (91) ; et
un organe de tuyau (914), s'étendant à partir d'une paroi externe du siège d'arbre principal (91) vers le corps de logement (18), une extrémité de l'organe de tuyau (914) étant reliée fixement au siège d'arbre principal (91) et une autre extrémité de l'organe de tuyau (914) étant reliée fixement au corps de logement (18), et l'organe de tuyau (914) étant configuré de telle sorte que l'espace fermé est en communication avec l'extérieur du corps de logement (18),
dans laquelle la partie pesage (200) inclut au moins deux des organes de tuyau (914), les au moins deux organes de tuyau (914) sont agencés le long d'une direction circonférentielle du corps de logement (18), l'un des au moins deux organes de tuyau (914) est configuré pour faire passer de l'air comprimé dans l'espace fermé, et l'un des organes de tuyau (914) est configuré pour remplir l'espace fermé avec une huile lubrifiante.

2. Balance de pesage à effet Coriolis selon la revendication 1, dans laquelle la partie pesage (200) inclut en outre :
un organe de guidage d'écoulement (50), agencé entre l'organe d'alimentation (20) et le corps de logement de protection (30) sur un côté de l'organe d'alimentation (20) qui est proche de la plaque de mesure (14), et situé dans le passage d'air.

3. Balance de pesage à effet Coriolis selon la revendication 1, comprenant en outre une partie entraînement (100),
dans laquelle la partie entraînement (100) inclut :
un corps de logement externe (4), un espace de logement (410) étant défini à l'intérieur du corps de logement externe (4) ;
un moteur d'entraînement (1), ayant une base (110) et un organe d'arbre de sortie (120), au moins une partie du moteur d'entraînement (1) étant agencée à l'extérieur du corps de logement externe (4) ;
un siège de moteur (21), fixé à la base (110) du moteur d'entraînement (1) et présentant un premier orifice d'arbre (210), l'organe d'arbre de sortie (120) passant à travers le premier orifice d'arbre (210) ; et
un support de palier (3), agencé sur un côté externe du siège de moteur (21) selon une direction radiale et présentant un second orifice d'arbre (310),
dans laquelle le siège de moteur (21) et le support de palier (3) sont agencés dans l'espace de logement (410), le support de palier (3) est fixé au corps de logement externe (4), le premier orifice d'arbre (210) et le second orifice d'arbre (310) sont coaxiaux, un premier palier (31) est fourni entre une paroi latérale du premier orifice d'arbre (210) du siège de moteur (21) et l'organe d'arbre de sortie (120), et un deuxième palier (41) est fourni entre une paroi externe du siège de moteur (21) et une paroi latérale du second orifice d'arbre (310) du support de palier (3),
la partie entraînement (100) est agencée à l'extérieur de la partie pesage (200).

4. Balance de pesage à effet Coriolis selon la revendication 1, dans laquelle la plaque de mesure (14) inclut :
un disque de roue (141), un orifice d'arbre pour le passage de l'arbre principal (9) étant fourni dans le disque de roue (141) ;
un anneau d'extrémité (143), agencé sur un côté du disque de roue (141) qui fait face à l'organe d'alimentation (20) ; et
une pluralité de lames (144), agencées entre le disque de roue (141) et l'anneau d'extrémité (143) le long d'une direction circonférentielle de la plaque de mesure (14),
dans laquelle la partie pesage (200) inclut en outre :
un organe de guidage de matériau (145), couplé fixement à une extrémité supérieure de l'arbre principal (9), agencé à une position d'axe central de l'orifice d'arbre du disque de roue (141), et s'étendant entre une limite de l'organe d'alimentation (20) et la plaque de mesure (14) et le disque de roue (141).

5. Balance de pesage à effet Coriolis selon la revendication 4, dans laquelle l'organe de guidage de matériau (145) inclut un cône de guidage (1451), le cône de guidage (1451) est coaxial avec la plaque de mesure (14),
le cône de guidage (1451) inclut :
une partie inférieure de cône (1452), un trou traversant pour le passage de l'arbre principal (9) étant formé dans un centre de la partie inférieure de cône (1452), l'arbre principal (9) étant serré par la partie inférieure de cône (1452), et la partie inférieure de cône (1452) étant fixée au disque de roue (141) ; et
une partie pointe de cône (1453), agencée sur un côté de la partie inférieure de cône (1452) qui est située sur l'organe d'alimentation (20) et fixée à l'extrémité supérieure de l'arbre principal (9).

6. Balance de pesage à effet Coriolis selon l'une des revendications 1 à 5, dans laquelle la partie pesage (200) inclut en outre :
un troisième palier (51), agencé entre le siège d'arbre principal (91) et l'arbre principal (9) et logé dans l'espace fermé (913).

7. Balance de pesage à effet Coriolis selon la revendication 6, dans laquelle le troisième palier (51) comporte au moins deux troisièmes sous-paliers (511,512) agencés le long de l'arbre principal (9), et les au moins deux troisièmes sous-paliers (511,512) sont espacés par un manchon.

8. Balance de pesage à effet Coriolis selon l'une des revendications 1 à 7, dans laquelle la partie pesage (200) inclut en outre :
une seconde poulie (72), agencée sur un côté de l'arbre principal (9) qui est opposé à la plaque de mesure (14) et reliée fixement à l'arbre principal (9),
l'organe d'arbre de sortie (120) comporte un arbre de sortie (1200) et un manchon d'arbre étendu (121), et le manchon d'arbre étendu (121) est fixé sur l'arbre de sortie (1200),
la partie entraînement (100) inclut en outre :
une première poulie (71), fixée au manchon d'arbre étendu (121) et une courroie synchrone (6) étant disposée sur la première poulie (71),
le corps de logement externe (4) est pourvu d'un trou traversant pour le passage de la courroie synchrone (6) ; et la première poulie (71) et la seconde poulie (72) sont reliées par la courroie synchrone (6), de sorte que le moteur d'entraînement (1) entraîne la rotation de l'arbre principal (9).

9. Balance de pesage à effet Coriolis selon la revendication 8, dans laquelle la partie pesage (200) inclut en outre :
une seconde partie de logement de poulie (720), un trou de courroie pour le passage de la courroie synchrone (6) étant formé dans la seconde partie de logement de poulie (720) ; et
une plaque de recouvrement de poulie (721), agencée sur un côté de la seconde partie de logement de poulie (720) qui est orientée à l'opposé de l'organe d'alimentation (20), de sorte que la seconde partie de logement de poulie (720), la plaque de recouvrement de poulie (721), une face d'extrémité du siège d'arbre principal (91) qui sont situées sur un côté opposé de la plaque de mesure (14) constituent ensemble un espace pour loger la seconde poulie (72).

10. Balance de pesage à effet Coriolis selon la revendication 1, dans laquelle le premier palier (31) comporte au moins deux premiers sous-paliers (311, 312) agencés vers le haut et vers le bas le long de l'organe d'arbre de sortie (120), les au moins deux premiers sous-paliers (311, 312) sont espacés par un manchon dans une direction d'extension de l'organe d'arbre de sortie (120), le deuxième palier (41) comporte au moins deux deuxièmes sous-paliers (411, 412) agencés vers le haut et vers le bas le long de l'organe d'arbre de sortie (120), et les au moins deux deuxièmes sous-paliers (411, 412) sont espacés par un autre manchon.

11. Balance de pesage à effet Coriolis selon l'une des revendications 1 à 9, dans laquelle un orifice d'évacuation (8) est disposé à une extrémité du corps de logement (18) qui est éloignée de l'orifice d'alimentation (201), et le corps de logement (18) comporte au moins deux corps de sous-logement reliés fixement l'un à l'autre.

12. Procédé de pesage, adoptant la balance de pesage à effet Coriolis selon l'une des revendications 1 à 11, comprenant les étapes suivantes :
mettre en rotation l'organe d'arbre de sortie (120) du moteur d'entraînement (1), pour entraîner la plaque de mesure (14) en rotation ;
faire entrer le matériau à mesurer dans la partie pesage (200) à partir de l'orifice d'alimentation (201) ;
mesurer, par le dispositif de mesure de capteur (82), une force d'action appliquée au dispositif de mesure de capteur (82) par l'organe de contact de mesure (81) ;
calculer la masse du matériau à mesurer en utilisant la force d'action,
**caractérisé en ce que**
pendant de faire entrer le matériau à mesurer dans la partie pesage (200) à partir de l'orifice d'alimentation (201), comprenant en outre :
faire passer de l'air comprimé à travers le tuyau de raccordement (40) ;
le procédé de pesage comprenant en outre :
ajouter de l'huile lubrifiante dans l'espace fermé (913) du siège d'arbre principal (91), incluant :
évacuer de l'air comprimé dans l'espace fermé (913) à travers une ouverture d'injection d'huile de déplacement d'air ; et
injecter, par l'ouverture d'injection d'huile de déplacement d'air, l'huile lubrifiante dans l'espace fermé (913).

13. Procédé de pesage selon la revendication 12, dans lequel le calcul de la masse du matériau à mesurer en utilisant la force d'action inclut :
convertir la force d'action en un signal électrique ; et
calculer la masse du matériau à mesurer en utilisant le signal électrique.
